# EUROPEAN PATENT APPLICATION

(11) **EP 3 932 998 A1**
(43) Date of publication of application: **05.01.2022**
(21) Application number: 20315329.1
(22) Date of filing: 30.06.2020
(51) Int. Cl.: C09D 11/033, C09D 11/16, C09D 11/18

(54) **HANDHELD WRITING TOOL HAVING IMPROVED CAP-OFF TIME**

(71) Applicant: Société BIC, 92110 Clichy (FR)
(72) Inventor: CONCEDIEU, Damien F., 77360 Vaires sur Marne (FR)
(74) Representative: Peterreins Schley

(57) **Abstract**

The present disclosure relates to writing instruments which are charged or recharged with a water-based ink composition. The water-based ink composition may be prepared from solid ink compositions which may be diluted with water. The solid ink composition comprises a specific combination of polyethylene glycol, at least one coloring agent and a humectant.

## Description

### Technical Field

The present disclosure relates to writing instruments which are charged with a water-based ink composition. The present disclosure also relates to a solid ink composition which may be used to refill the rechargeable writing instrument. The solid ink composition itself is a concentrate of the water-based ink composition and can be diluted by the user with e.g. water to produce the aforementioned water-based ink composition. The present disclosure further provides inks which improve the cap-off time, i.e. the time span the writing instrument can be left exposed to the environment without drying out of the ink to such an extent that writing is severely compromised. The present disclosure further relates to methods of producing the solid ink composition and the water-based ink composition as well as to various uses thereof.

### Background of the Disclosure

CN1197094 discloses a solid ink made up of triphenyl methane sodium sulfonate through pulverization, sieving and tableting. The corresponding ink is obtained by dissolving the solid ink in water. However, the solid ink needs heating (50-90°C) to dissolve in water. Dissolving at lower temperatures such as 25°C is reported to not result in an immediately workable ink. CN1197094 is silent on the cap-off properties of the ink.

### Summary of the Disclosure

The inventors of the present disclosure have surprisingly found that the use of specific polyethylene glycols which are solid at room temperature in a solid ink composition may help in improving the stability of the resulting solid ink composition, without altering the coloring or marking properties of the resulting ink. The aforementioned improved stability may be seen by a more stable consistency of the ink and the reduction or absence of the exudation phenomenon. Moreover, the solid ink of the present disclosure can be diluted and dispersed to an ink by simply adding cold water, and even only tap water, followed by brief manual agitation such as shaking the ink by hand.

The inventors of the present disclosure have further surprisingly found that the cap-off time of a writing instrument containing the aforementioned ink can be substantially improved by adding specific humectants.

Accordingly, in a first aspect, the present disclosure relates to a solid ink composition for refilling a handheld writing tool. The solid ink composition may refer to an ink composition which is solid at room temperature, in particular at about 20 °C. The solid ink composition may comprise a polyethylene glycol. The polyethylene glycol may have a melting point of at least about 20°C. It may have a number average molecular weight of between about 800 and about 7800 g/mol. The solid ink composition may further comprise at least one coloring agent. The coloring agent may be selected from the group consisting of dyes and pigments. The solid ink composition may further comprise a humectant. The humectant may be a water-soluble alcohol. It may have a melting point of less than about 20 °C. It may have a boiling point of at least about 150°C. The solid ink composition may have a water content of less than about 15 wt.-%, relative to the total weight of the solid ink composition.

In some embodiments, the solid ink composition may comprise a polyethylene glycol having a number average molecular weight of between about 3000 and about 7500 g/mol, more specifically between about 3400 and about 7000 g/mol.

In some embodiments, the solid ink composition may comprise a polyethylene glycol which is present in an amount ranging from about 30 to about 90% by weight, more specifically from about 35 to about 85% by weight, and in particular from about 40 to about 80% by weight, relative to the total weight of the solid ink composition.

In some embodiments, the solid ink composition may comprise a coloring agent which is a dye selected from the group consisting of azoic dyes, triarylmethane dyes, phthalocyanine derivatives dyes, xanthene dyes, and mixtures thereof. In some embodiments, it may be particularly advantageous that the coloring agent is a non-pH sensitive dye.

In some embodiments, the solid ink composition may comprise a coloring agent which is present in an amount ranging from about 0.75 to about 70% by weight, more specifically from about 1 to about 60% by weight, and in particular from about 1.7 to about 50% by weight, relative to the total weight of the solid ink composition.

In some embodiments, the humectant of the solid ink composition may comprise an aliphatic alcohol wherein the hydrocarbon chain may be interrupted or not by one or more heteroatoms, in particular heteroatoms selected form the group consisting of oxygen, nitrogen and sulfur, more specifically oxygen.

In some embodiments, the humectant may comprise an alcohol having at least 2 hydroxyl groups, more specifically an aliphatic alcohol having between 2 and about 6 hydroxyl groups, and in particular an aliphatic alcohol having 2, 3 or 4 hydroxyl groups.

In some embodiments, the humectant may be selected from glycerin, ethylene glycol, diethylene glycol, triethylene glycol, propylene glycol, and thiodiglycol, and mixtures thereof. In some embodiments, it may be advantageous that the humectant is selected from glycerin and triethylene glycol. In some embodiments, it may be particularly advantageous that the humectant is glycerin.

In some embodiments, the humectant may be present in an amount ranging from about 1 to about 27 wt.-%, more specifically from about 2 to about 22 wt.-%, and in particular from about 4 to about 18 wt.-%, relative to the total weight of the solid ink composition.

In some embodiments, the weight ratio between humectant and polyethylene glycol may be between about 1:100 and about 1:1, in particular between about 1:30 and about 1:2, and in particular from about 1:15 and about 1:4. In particular, the weight ratio between humectant and polyethylene glycol may improve the cap-off time, while keeping a stable solid composition.

In some embodiments, the solid ink composition may have a water content of less than about 10 wt.-%, more specifically less than about 5 wt.-%, and in particular less than about 4 wt.-%, relative to the total weight of the solid ink. In some embodiments, it may be advantageous that the solid ink composition is essentially free of water or free of water.

In some embodiments, the solid ink composition may be in the form of a tablet or powder, and in particular in the form of a tablet or a powder which is contained in a sachet.

In some embodiments, the components of the solid ink composition may be homogenously dispersed in the solid ink composition.

In some embodiments, the solid ink composition may be dissolvable or dispersible in water under formation of a homogeneous aqueous mixture when the solid ink composition is stirred or shaken at about 20°C for about 30 seconds to about 10 minutes, in about 4 to about 15 times its weight of water, in particular in about 6 to about 10 times its weight of water.

In some embodiments, the solid ink composition further comprises a biocide, in particular 2-phenoxyethanol.

In a second aspect, the present disclosure relates to a method for preparing a solid ink composition as described in the first aspect of the present disclosure. The method may comprise the steps of: (a) melting the polyethylene glycol having a melting point of at least about 20°C and a number average molecular weight of between about 800 and about 7800 g/mol; b) combining the molten polyethylene glycol of step (a) with the at least one coloring agent and the water-soluble alcohol having a melting point of less than about 20 °C and a boiling point of at least about 150 °C; (c) stirring the combined components at least at a temperature at which the polyethylene glycol remains molten; (d) solidifying the ink composition by cooling, in particular at room temperature (about 20°C); and optionally (e) shaping the solid ink composition in the form of a tablet or grinding the solid ink composition to a powder.

In a third aspect, the present disclosure relates to a water-based ink composition comprising the components of the solid ink composition according to the first aspect of the present disclosure and a solvent, in particular water. In some embodiments, it may be particularly advantageous that the water-based ink composition is in liquid form.

In some embodiments, the components of the solid ink composition according to first aspect of the present disclosure are present in the water-based ink composition in a total amount of about 2 to about 40 wt.-%, more specifically in a total amount of about 5 to about 25 wt.-%, and in particular in a total amount of about 7 to about 22 wt.-%, relative to the total weight of the water-based ink composition.

In some embodiments, the solvent may be present in an amount of from about 60 to about 98 wt.-%, more specifically from about 75 to about 95 wt.-%, and in particular from about 78 to about 90 wt.-%, relative to the total weight of the water-based ink composition.

In a fourth aspect, the present disclosure relates to method for preparing a water-based ink composition according to the third aspect of the present disclosure comprising the steps of combining a solid ink composition according to the first aspect of the present disclosure with a solvent, in particular water.

In a fifth aspect, the present disclosure relates to the use of a solid ink composition according to the first aspect of the present disclosure for refilling a handheld writing tool, in particular a felt-pen, a highlighter, a roller pen, or a marker.

In a sixth aspect, the present disclosure relates to the use of a water-based ink composition according to third aspect of the present disclosure for refilling a handheld writing tool, in particular a felt-pen, a highlighter, a roller pen, or a marker.

In a seventh aspect, the present disclosure relates to an optionally rechargeable handheld writing tool, in particular a felt-pen, a highlighter, a roller pen, or a marker, comprising the solid ink composition according to first aspect of the present disclosure or the water-based ink composition according to the third aspect of the present disclosure.

In an eighth aspect, the present disclosure relates to method of recharging a rechargeable handheld writing tool, in particular a felt-pen, a highlighter, a roller pen, or a marker, comprising the steps of: (a) inserting a solid ink according to the first aspect of the present disclosure into the handheld writing tool, (b) inserting a solvent, in particular water, into the handheld writing tool, and (c) mixing the solid ink composition and the solvent by agitation of the handheld writing tool.

In an ninth aspect, the present disclosure relates to method of recharging a rechargeable handheld writing tool, in particular a felt-pen, a highlighter, a roller pen, or a marker, comprising the steps of inserting a water-based ink composition according to the third aspect of the present disclosure into the handheld writing tool.

### Detailed Description of the Disclosure

Hereinafter, a detailed description will be given of the present disclosure. The terms or words used in the description and the claims of the present disclosure are not to be construed limitedly as only having common-language or dictionary meanings and should, unless specifically defined otherwise in the following description, be interpreted as having their ordinary technical meaning as established in the relevant technical field. The detailed description will refer to specific embodiments to better illustrate the present disclosure, however, it should be understood that the presented disclosure is not limited to these specific embodiments.

In its first aspect, the present disclosure relates to a solid ink composition for refilling a handheld writing tool. For the purposes of the present disclosure, the term "solid ink composition for refilling a handheld writing tool" is intended to mean a "writing ink" which is intended to be used in a handheld writing instrument, and in particular in a pen. Such a writing ink should not be confused with a "printing ink" which is used in printing machines and which does not have the same technical constraints, and thus the same specifications. Indeed, a writing ink should not contain solid particles of which the size is greater than the channels of the writing instrument so as to avoid clogging the handheld writing tool.

The solid ink composition may refer to an ink composition which is solid at room temperature, in particular at about 20°C, more specifically from about 20°C to about 45°C, even more specifically from about 20°C to about 40°C, and in particular from about 20°C to about 35°C. In the sense of the present disclosure, the term "solid ink composition" may refer to the ink composition being handable for the end user at about 20°C. This may include a semi-solid or waxy consistency which allows the end user to transfer the solid ink composition to a vessel (such as a storage compartment within the handheld writing tool) for dilution with a solvent such as water. Alternatively, the term "solid ink composition" may refer to an ink composition which is solid or semi-solid at room temperature (20°C) and has a melting point of higher than about 35°C, specifically higher than about 40°C, and in particular higher than about 45°C, measured by Differential Scanning Calorimetry (DSC). In particular, the solid ink composition may refer to an ink composition which is solid or semi-solid at temperature more specifically from about 20°C to about 45°C, even more specifically from about 20°C to about 40°C, in particular from about 20°C to about 35°C, measured by Differential Scanning Calorimetry (DSC).

The solid ink composition may comprise a polyethylene glycol. The polyethylene glycol may have a melting point of at least about 20°C. It may have a number average molecular weight of between about 800 and about 7800 g/mol. In some embodiments, the solid ink composition may comprise a polyethylene glycol having a number average molecular weight of between about 3000 and about 7500 g/mol, more specifically between about 3400 and about 7000 g/mol. Additionally or alternatively, the polyethylene glycol may be solid at at least room temperature (about 20°C), more specifically solid at at least about 35°C, and in particular solid at at least a about 50°C.

In some embodiments, the solid ink composition may comprise a polyethylene glycol which is present in an amount ranging from about 30 to about 90% by weight, more specifically from about 35 to about 85% by weight, and in particular from about 40to about 80% by weight, relative to the total weight of the solid ink composition.

The solid ink composition may further comprise at least one coloring agent. The coloring agent may be selected from the group consisting of dyes and pigments. The term dye and pigment is not considered to particularly limiting. The term "dye" may be understood as meaning colored, mineral or organic particles of any form, which are soluble in the medium in which they are incorporated, and which are intended to color the solid ink composition. Dyes may be intensely colored or fluorescent organic substances which impart color to a substrate by selective absorption of light. They may be soluble and/or go through an application process which, at least temporarily, destroys any crystal structure by absorption, solution, and mechanical retention, or by ionic or covalent chemical bonds. The term "pigment" should be understood as meaning white or colored, mineral or organic particles of any form, which are insoluble in the medium in which they are incorporated, and which are intended to color the solid ink composition. Pigments may be colored, black, white or fluorescent particulate organic or inorganic solids which may be insoluble in, and essentially physically and chemically unaffected by, the vehicle or substrate in which they are incorporated. They may alter appearance by selective absorption and/or by scattering of light. Pigments may be dispersed in vehicles or substrates for application. Pigments may retain a crystal or particulate structure throughout the coloration process.

In some embodiments, the coloring agent present in the solid ink composition may comprise at least one dye. The dyes usable in the ink of the present disclosure may be any dyes well-known to the skilled person, such as black, blue, red, green, violet, pink, turquoise, etc. dyes. In particular, the dyes usable in the ink according to the present disclosure may be alcohol-soluble dyes, oil-soluble dyes, direct dyes, acid dyes, basic dyes, metallized dyes and various salt-forming-type dyes. More particularly, the dyes may be selected from the group consisting of azoic dyes, triarylmethane dyes, phthalocyanine dyes, xanthene dyes, and mixtures thereof. Specific examples of a dye usable in the solid ink composition of the present disclosure include but are not limited to the following: Direct Blue 199, Acid Blue 9, Acid Red 52, Acid Yellow 23, Food Yellow 3, Solvent Green 7, Acid Orange 7, Reactive Red 141, Reactive Red 24:1, Acid Red 18, Acid Red 51, Acid Red 27, and Acid Black 172. Preferably, the coloring agent is a non-pH sensitive dye, in particular said non-pH sensitive dye is soluble or dispersible in water.

In particular, the non-pH sensitive dye is chosen in the group consisting of direct dyes (for example C.I direct black 17, 19, 22, 32, 38, 51, 71; C.I direct yellow 26, 44; C.I direct red 1, 4, 23, 31, 37, 39, 75, 80, 81, 83, 225, 226, 227; C.I direct blue 1, 15, 41, 71, 86, 87, 106, 108, 199, and the like), acid dyes (for example C.I acid black 1, 2, 24, 26, 31, 52, 107, 109, 110, 119, 154; C.I acid yellow 1, 7, 17, 19, 23, 25, 29, 38, 42, 49, 61, 72, 78, 110, 127, 135, 141, 142; C.I acid red 8, 9, 14, 18, 26, 27, 33, 35, 37, 52, 57, 82, 83, 94, 111, 129, 131, 138, 186, 249, 254, 265, 276; C.I acid violet 15, 49; C.I acid blue 3, 7, 9, 15, 23, 25, 40, 41, 43, 62, 78, 83, 90, 100, 103, 104, 112, 113, 158; C.I acid green 16, 25, 27; C.I acid orange 56, and the like), and mixtures thereof. The term "non-pH sensitive dye" may be understood as meaning a dye having a color that does not change color depending on the pH.

The coloring agent of the present disclosure may also be a pigment. Non-limiting examples of pigments include organic, inorganic and processed pigments. Thus, the pigment may for example be an inorganic pigment such as a carbon black, ultramarine and titanium dioxide pigment, an organic pigment such as an azo-based pigment, phthalocyanine-based pigment, indigo pigment, thioindigo pigment, thren-based pigment, quinacridone-based pigment, anthraquinone-based pigment, thron-based pigment, diketopyrrolopyrrole-based pigment, dioxazinebased pigment, perylene-based pigment, perinone-based pigment and isoindolinone-based pigment, a metal pigment such as an aluminum powder or aluminum powder whose surface is treated with a colored resin, a metal-gloss-coated pigment, a metal pigment having a metal vapor deposition film, a colloidal particle selected from the group consisting of gold, silver, platinum and copper, a fluorescent pigment, a light-storing pigment, a pearl pigment, and the like.

In some embodiments, the solid ink composition may comprise a coloring agent which is a dye selected from the group consisting of azoic dyes, triarylmethane dyes, phthalocyanine derivatives dyes, xanthene dyes, and mixtures thereof.

In some embodiments, the solid ink composition may comprise a coloring agent which is present in an amount such that the color difference (ΔE) of the solid ink in comparison to the diluted ready-to-use water-based ink is less than about 3. A color difference (ΔE) of less than 3 may be not detectable to the human eye. It can be determined by using a spectro-colorimeter such as the Spectrocolorimeter Konica Minolta, illuminated with a CIE D65 light source and values measured at 10° observer angle.

In some embodiments, the solid ink composition may comprise a coloring agent which is present in an amount ranging from about 0.75 to about 70% by weight, more specifically from about 1 to about 60% by weight, and in particular from about 1.75 to about 50% by weight, relative to the total weight of the solid ink composition.

The solid ink composition may further comprise a humectant. Humectants as such are known in the art and are substances capable of retaining or binding water in a composition. Alternatively or additionally, a humectant is a substance comprising a functional group capable of forming a hydrogen bridge with H₂O. Alternatively or additionally, a humectant is a substance comprising one or more hydroxyl groups.

The humectant may be a water-soluble alcohol. In some embodiments, the water-soluble alcohol may have a solubility in water of at least about 10 g/L, more specifically at least 20 g/L, in particular at least about 50 g/L at about 20°C. In some embodiments, it may be particularly advantageous that the water-soluble alcohol is miscible in any weight ratio with water under formation of a homogeneous mixture at about 20°C.

The humectant may have a melting point of less than about 20 °C. It may have a boiling point of at least about 150°C, more specifically at least about 200°C, and in particular at least about 250°C, under ambient pressure. In case that the compound decomposes prior to melting, the decomposition point is to be considered as the melting point.

In some embodiments, the humectant may comprise an aliphatic alcohol wherein the hydrocarbon chain may be interrupted or not by one or more heteroatoms, in particular heteroatoms selected form the group consisting of oxygen, nitrogen and sulfur, more specifically oxygen. In some embodiments, the aforementioned humectant may additionally have between 2 to about 30, in particular between 3 and about 15, carbon atoms.

In some embodiments, the humectant may comprise an alcohol having at least 2 hydroxyl groups, more specifically an aliphatic alcohol having between 2 and about 6 hydroxyl groups, and in particular an aliphatic alcohol having 2, 3 or 4 hydroxyl groups.

In some embodiments, the humectant may be selected from glycerin, ethylene glycol, diethylene glycol, triethylene glycol, propylene glycol, and thiodiglycol, and mixtures thereof. In some embodiments, it may be advantageous that the humectant is selected from glycerin and triethylene glycol. In some embodiments, it may be particularly advantageous that the humectant is glycerin.

In some embodiments, the humectant may be present in an amount ranging from about 1 to about 27 wt.-%, more specifically from about 2 to about 22 wt.-%, and in particular from about 4 to about 18 wt.-%, relative to the total weight of the solid ink composition.

In some embodiments, the weight ratio between humectant and polyethylene glycol may be between about 1:100 and about 1:1, in particular between about 1:30 and about 1:2, and in particular from about 1:15 and about 1:4.

In some embodiments, it may be particularly advantageous that the humectant is selected from the group of alcohols having at least 2 hydroxyl groups, more specifically an aliphatic alcohol having between 2 and about 6 hydroxyl groups, and in particular an aliphatic alcohol having 2, 3 or 4 hydroxyl groups; which is miscible in any weight ratio with water under formation of a homogeneous mixture at about 20°C. The present inventors have surprisingly found that these humectants are particularly suitable for improving the cap-off time of a handheld writing tool containing the water-based ink composition according to the present disclosure. In some embodiments, it may be particularly advantageous that the humectant is selected from glycerin and triethylene glycol and is present in an amount ranging from about 2 to about 27 wt.-%, more specifically from about 5 to about 22 wt.-%, and in particular from about 8 to about 18 wt.-%, relative to the total weight of the solid ink composition.

The solid ink composition may have a water content of less than about 15 wt.-%, relative to the total weight of the solid ink composition. In some embodiments, the solid ink composition may have a water content of less than about 10 wt.-%, more specifically less than about 5 wt.-%, and in particular less than about 4 wt.-%, relative to the total weight of the solid ink. In some embodiments, it may be advantageous that the solid ink composition is essentially free of water or free of water.

In some embodiments, the solid ink composition may be in the form of a tablet or powder, and in particular in the form of a tablet or a powder which is contained in a sachet.

In some embodiments, the components of the solid ink composition may be homogenously dispersed in the solid ink composition.

In some embodiments, the solid ink composition may be dissolvable or dispersible in water under formation of a homogeneous aqueous mixture when the solid ink composition is stirred, for instance at about 100 rpm, or shaken at about 20°C for about 30 seconds to about 10 minutes, in about 4 to about 15 times its weight of water, in particular in about 6 to about 10 times its weight of water. The aforementioned test may be a good indicator of the ease of diluting the solid ink composition by the end user. It should be understood that the end user will typically manually shake or swirl the solid ink composition in water to produce the water-based ink composition for a hand-held writing tool.

In some embodiments, the solid ink composition may further comprise at least one additive selected from the group consisting of antimicrobial bio agents (biocides), dispersing agents, antifoam agents, wetting agents, pH regulators (such as sodium hydroxide, triethanolamine or 2-(2-aminoethoxyethanol), and mixtures thereof.

Advantageously, the solid ink composition may comprise at least one antimicrobial agent selected from the group consisting of 2-phenoxyethanol, methyl paraben, isothiazolinone,1,2-benzisothiazolin-3-one, 2-methyl-4-isothiaolin-3-one, and mixtures thereof. The term antimicrobial agent or biocide is not to be limitingly construed and is intended to include active substances which may destroy, deter, render harmless, prevent the action of, or otherwise exert a controlling effect on any harmful organism by chemical or biological means in the ink composition. The term antimicrobial agent or biocide in particular refers to antibacterial agents, antifungal agents and algicides. In some embodiments, it may be particularly advantageous that the solid ink composition further comprises 2-phenoxyethanol as biocide since it may be particularly effective. Without wishing to be bound by theory, it is considered that 2-phenoxyethanol may be particularly effective since it is endowed with relatively good miscibility with other components such as the polyethylene glycol, the humectant and water. In some embodiments, it may be advantageous that the biocide present in a content ranging from about 1 to about 24% by weight, in particular from about 2 to about 18% by weight, and in particular from about 3to about 12% by weight, relative to the total weight of the solid ink composition.

In a second aspect, the present disclosure relates to a method for preparing a solid ink composition as described in the first aspect of the present disclosure. The method may comprise the steps of: (a) melting the polyethylene glycol having a melting point of at least about 20°C and a number average molecular weight of between about 800 and about 7800 g/mol; b) combining the molten polyethylene glycol of step (a) with the at least one coloring agent and the water-soluble alcohol having a melting point of less than about 20 °C and a boiling point of at least about 150 °C; (c) stirring the combined components at least at a temperature at which the polyethylene glycol remains molten; (d) solidifying the ink composition by cooling, in particular at room temperature (20°C); and optionally (e) shaping the solid ink composition in the form of a tablet or grinding the solid ink composition to a powder.

In some embodiments, it may be advantageous that the step (e) of shaping the solid ink composition in the form of a tablet is done between two aluminum elements, in particular two aluminum foils.

It should be understood that the embodiments referred to above with respect to the first aspect of the disclosure equally apply to and are combinable with the second aspect of the disclosure.

In a third aspect, the present disclosure relates to a water-based ink composition comprising the components of the solid ink composition according to the first aspect of the present disclosure and a solvent, in particular water.

In some embodiments, it may be particularly advantageous that the water-based ink composition is in liquid form. The solvent of the water-based ink composition is advantageously water, and in particular selected from the group consisting of demineralized water and tap water.

In some embodiments, the components of the solid ink composition according to first aspect of the present disclosure are present in the water-based ink composition in a total amount of about 2 to about 40 wt.-%, more specifically in a total amount of about 5 to about 25 wt.-%, and in particular in a total amount of about 7 to about 22 wt.-%, relative to the total weight of the water-based ink composition. As an non-limiting example, the water-based ink composition may consist of water and the solid ink composition according to first aspect of the present disclosure, wherein said solid ink composition is present in amounts of 1 to about 27 wt.-%, more specifically in a total amount of about 2 to about 22 wt.-%, and in particular in a total amount of about 4 to about 18 wt.-%, relative to the total weight of the water-based ink composition.

In some embodiments, the solvent may be present in an amount of from about 60 to about 98 wt.-%, more specifically from about 75 to about 95 wt.-%, and in particular from about 78 to about 90 wt.-%, relative to the total weight of the water-based ink composition.

In some embodiments, the water-based ink composition of the present disclosure may have a viscosity ranging from about 1 to about 10 mPa·s, and more specifically from about 1.5 to about 8 mPa·s, and in particular from about 2 to about 6 mPa·s, when measured at room temperature (about 20°C) at a speed of about 60 rpm, with a Brookfield Viscosimeter such as the Brookfield Viscosimeter DVT or DV-II using spindle UL.

In some embodiments, the water-based ink composition of the present disclosure may have a pH ranging from about 2 to about 10, and specifically from about 3 to about 9, and in particular from about 4 to about 8, when measured at room temperature (about 20°C) with a pH-meter such as SEVENEASY from Mettler Toledo.

It should be understood that the embodiments referred to above with respect to the first aspect of the disclosure equally apply to and are combinable with the third aspect of the disclosure.

In a fourth aspect, the present disclosure relates to method for preparing a water-based ink composition according to the third aspect of the present disclosure comprising the steps of combining a solid ink composition according to the first aspect of the present disclosure with a solvent, in particular water.

It should be understood that the embodiments referred to above with respect to the first and/or third aspect of the disclosure equally apply to and are combinable with the fourth aspect of the disclosure.

In a fifth aspect, the present disclosure relates to the use of a solid ink composition according to the first aspect of the present disclosure for refilling a handheld writing tool, in particular a felt-pen, a highlighter, a roller pen, or a marker.

It should be understood that the embodiments referred to above with respect to the first aspect of the disclosure equally apply to and are combinable with the fifth aspect of the disclosure.

In a sixth aspect, the present disclosure relates to the use of a water-based ink composition according to third aspect of the present disclosure for refilling a handheld writing tool, in particular a felt-pen, a highlighter, a roller pen, or a marker.

It should be understood that the embodiments referred to above with respect to the first and/or third aspect of the disclosure equally apply to and are combinable with the sixth aspect of the disclosure.

In a seventh aspect, the present disclosure relates to an optionally rechargeable handheld writing tool, in particular a felt-pen, a highlighter, a roller pen, or a marker, comprising the solid ink composition according to first aspect of the present disclosure or the water-based ink composition according to the third aspect of the present disclosure.

A rechargeable handheld writing tool may comprise: an axial barrel comprising a solid ink composition as defined in the first aspect of the present disclosure or a water-based ink composition as defined according to the third aspect of the present disclosure, and writing tool body which delivers the water-based ink composition stored in the axial barrel to the handheld writing tool.

It should be understood that the embodiments referred to above with respect to the first and/or third aspect of the disclosure equally apply to and are combinable with the seventh aspect of the disclosure.

In an eighth aspect, the present disclosure relates to method of recharging a rechargeable handheld writing tool, in particular a felt-pen, a highlighter, a roller pen, or a marker, comprising the steps of: (a) inserting a solid ink according to the first aspect of the present disclosure into the handheld writing tool, (b) inserting a solvent, in particular water, into the handheld writing tool, and (c) mixing the solid ink composition and the solvent by agitation of the handheld writing tool.

It should be understood that the embodiments referred to above with respect to the first and/or third aspect of the disclosure equally apply to and are combinable with the eighth aspect of the disclosure.

In a ninth aspect, the present disclosure relates to method of recharging a rechargeable handheld writing tool, in particular a felt-pen, a highlighter, a roller pen, or a marker, comprising the steps of inserting a water-based ink composition according to the third aspect of the present disclosure into the handheld writing tool.

It should be understood that the embodiments referred to above with respect to the first and/or third aspect of the disclosure equally apply to and are combinable with the ninth aspect of the disclosure.

In the following the present disclosure will be further elaborated by way of Examples.

### Examples:

### Measurement Methods:

In the following Examples, the following measurement methods were used:

### 1. Measurement of the moisture % of the solid ink composition:

### Equipment: Coulometer Metrohm 831 KF11

Method:
1. Check that the top of the electrode of measurement dips in Hydranal Coulomat E solution (Riedel-de-Haen)
2. Weight mg of solid ink composition
3. Calculate the % difference between two measurements at 105°C as:
   (H1-H2)/H1^{∗}100, wherein:
   HI: Humidity of a blank sample (empty vial), and
   H2: Humidity of the solid ink composition.

### 2. Measurement of the melting point of the solid ink composition:

### Equipment: Differential Scanning Calorimeter (DSC)

Method:
1. Equilibrate at 40°C
2. Mark end of cycle
3. Ramp: 1°C/min to 70°C
4. Isothermal for 2 minutes
5. Ramp: 1°C/min to 0°C
6. Isothermal for 2 minutes
7. End of method

### 3. Measurement of the dissolution time of the solid ink composition in demineralized water and tap water:

Method:
1. Weight the quantity of solid ink composition
2. Add a specific quantity of water
3. Put on a chronometer, shake for 30 seconds and stop the shaking
4. At each minute, shake 10 seconds and verify if the solid ink composition is dissolved in water. Stop the shaking when the solid ink composition is totally dissolved
5. Stop the chronometer, and note the dissolution time

### 4. Color Analysis:

The color obtained by dissolution of solid ink with demineralized water and tap water is evaluated by measuring the color difference (ΔE) of the ink by using a spectro-colorimeter (Spectrocolorimeter Konica Minolta - illuminated with a CIE D65 light source and measured at 10° observer angle). The color obtained by dissolution of solid ink with demineralized water is the reference.

Method:
1. The solid ink is dissolved in demineralized water and its color is measured with the Spectrocolorimeter Konica Minolta.
2. The solid ink is dissolved in tap water and its color is measured with the Spectrolocolorimeter Konica Minolta.
3. Measurement of ΔE (difference between the solid ink dissolved in demineralized water and the solid ink dissolved in tap water).

### 5. Measurement of the cap-off time:

This test designates the ability of the water-based ink composition of not drying up in the writing instrument.

### Equipment: Air conditioned and humidity controlled room: 23 °C (±2°) 50% RH (±5%) and ISO 12757 test paper

Method:
1. The pens are positioned horizontally without caps at 23°C/ 50% RH.
2. Store the pens either during 1 day (24H), 2 days (48H), 3 days (72H), 4 days (96H)
3. Transfer ink from the pen tip to a paper.
4. Draw a smear.
5. Visual assessment of the written mark on cellulosic paper.

### 6. Measurement of antimicrobial effectiveness:

This test indicates the effectiveness of antimicrobial agents against, for example, *Staphylococcus aureus, Pseudomonas aeruginosa, Escherichia coli, Candida albicans, Aspergillus brasiliensis*) in the water-based ink composition.

The water-based ink composition was diluted in either demineralized water and stored in a test bottle for 3 months at 20°C or diluted in tap water and stored in a test bottle for 1 month at 20°C. The antimicrobial or algae formation was visually inspected afterwards.

### 7. Measurement of Viscosity:

### Equipment: BROOKFIELD viscosimeter DV-II with spindle UL, 20°C

Method:
1. Introduce 16 mL of ink into the sample vessel of the viscosimeter.
2. Run the viscosimeter at a shear rate of 60 rpm during 2 min at 20°C,
3. Report the value obtained

### 8. Measurement of Surface Tension

According to standard procedure with a tensiometer K100 from KRÜSS at 20°C, according to the Wilhelmy plate protocol.

### 9. Measurement of pH:

### Equipment: an Inlab Science PRO-ISM with pH-meter SEVENEASY from METTLER TOLEDO at 20°C.

Method:
1. Introduce 50g of ink into the beaker with a magnetic stirrer.
2. Put the electrode on the solution at 20°C and wait for the stabilization of the value
3. Report the value obtained

### Example 1: Preparation of a solid ink composition and of the corresponding water-based ink composition

A solid ink composition and the corresponding water-based ink composition, obtained after addition of water, having the compositions presented in Table 1 below, were prepared.

**Table 1**

| **Raw Materials** | **Solid ink composition (wt.-%)** | **Water-based ink composition (wt.-%)** |
|---|---|---|
| Food Blue 2 (Bleu Acide Brilliant FCF 85% E133, SA Color) | 25.75 | 3.42 |
| Acid Red 52 (Rhodamine Sanolin B 02, Clariant) | 13.25 | 1.76 |
| Methyl paraben (Ueno Methyl Paraben NF, Ueno) | 0.75 | 0.10 |
| PEG 4000 (Pluriol E 4000, BASF) | 60.25 | 8.00 |
| Demineralized water | - | 86.72 |
| Total | 100 | 100 |

The solid ink composition was prepared according to the following protocol:
150.77g of PEG 4000 (Pluriol E 4000, BASF) was put in a DISPERMAT TANK at a temperature of 70°C, under slow stirring at 150 rpm. When PEG 4000 was totally melted, 1.90g of methyl paraben (Ueno Methyl Paraben NF, Ueno) was added, and the mixture was left under slow stirring at 500 rpm for 10 minutes. 64.36g of Food Blue 2 was then added. The stirring was increased at 2,000 rpm in order to have a "doughnut effect" (i.e. when a hole opens up around the stirring blade) for 15 minutes. 33.18g of Acid Red 52 (Rhodamine Sanolin B 02, Clariant) was added, while maintaining the stirring in order to keep the "doughnut effect" for 30 minutes.

The resulting molten ink composition was then poured between two aluminum foils at room temperature (20°C), and left for 2 hours, in order to obtain a solid ink composition.

The characteristics of the solid ink composition were as follows:
The moisture % measured for the solid ink composition of Example 1 was of 1.59%.

The melting point measured for the solid ink composition of Example 1 was of 59.5°C.

The dissolution time of the solid ink composition was:

**Table 2**

| | Quantity of solid ink composition | Quantity of water | Dissolution time |
|---|---|---|---|
| | (g) | (g) | (minutes) |
| In demineralized water | 0.66 | 4.37 | 8 |
| In tap water | 0.68 | 4.46 | 7.5 |

As can be seen from the above data, the dissolution time of the solid ink composition was roughly equivalent for demineralized water and tap water.

A water-based ink composition was then prepared by dissolving 0.67g of the solid ink composition previously prepared in 4.33g of demineralized water contained in a test tube, and shaken by the operator to reproduce the consumer action.

The characteristics of the water-based ink composition were as follows:
- Viscosity: 3.6 mPa·s,
- Surface tension: 50.3 mN·m⁻¹,
- pH = 5.

The water-based ink composition was then introduced in a felt-pen Visacolor^{™} system. The water-based ink composition appeared homogeneous, with no leakage and no sedimentation. The water-based ink composition did not show any colorimetry difference with respect to the conventional water-based ink composition Visacolor^{™}.

If the color difference AE is less than 3, the difference of colors for the observer is not visible to the naked eye.

The color difference measured for the solid ink composition is: AE = 0.65. Therefore, the use of demineralized water or tap water does not affect the color of the ink.
In the measurement of the cap-off time, it was found that a written mark on the cellulosic paper cannot be made after1 day (24H), 2 days (48H), 3 days (72H) and even 4 days (96H). It was observed that this is difficult to make a written mark on the cellulosic paper after 1 day (24H). Consequently, a drying-up of the pen tip has occurred after 1 day (24H). Hence, the water-based ink composition exhibits poor results in terms of cap-off, because the cap-off time is below 1 day (24H).

In the measurement of antimicrobial effectiveness, no microbial activity could be observed in either the demineralized water sample or the tap water sample.

From the above, it is evident that the composition of Example 1 yields a very good solid writing ink that is storage-stable and can be easily diluted to a water-based writing ink. However, the cap-off time of the composition is poor.

### Example 2: Preparation of a comparative ink composition and of the corresponding water-based ink composition

A comparative ink composition, having the formula presented in Table 3 below, was prepared.

**Table 3**

| **Raw Materials** | **Ink composition (wt.-%)** |
|---|---|
| Food Blue 2 (Bleu Acide Brilliant FCF 85% E133, SA Color) | 16.78 |
| Acid Red 52 (Rhodamine Sanolin B 02, Clariant) | 8.64 |
| Methyl paraben (Ueno Methyl Paraben NF, Ueno) | 0.48 |
| PEG 600 (Pluriol E 600, BASF) | 74.10 |
| Total | 100 |

The solid ink composition was prepared according to the following protocol:
260.60g of PEG 600 was put in a DISPERMAT TANK at a temperature of 70°C, under slow stirring at 300 rpm. When PEG 600 was totally melted, 1.70g of methyl paraben (Ueno Methyl Paraben NF, Ueno) was added, and the mixture was left under slow stirring at 300 rpm during is 5 minutes. 59.00g of Food Blue 2 was then added. The stirring was increased at 1,400 rpm in order to have a "doughnut effect" (i.e. when a hole opens up around the stirring blade) for 15 minutes. 30.40g of Acid Red 52 (Rhodamine Sanolin B 02, Clariant) was added, while maintaining the stirring in order to keep the "doughnut effect" for 30 minutes.

The resulting melted ink composition was then poured between two aluminum foils at room temperature (20°C), and left for 2 hours, in order to obtain a solid ink composition.

At the end of the process, the formulation was very liquid and it was difficult to flow correctly the ink composition between aluminum foils.

After two hours at room temperature (20°C) between aluminum foils, the ink composition was still not solid and the aluminum foils stuck to the formulation.

The ink composition was then put at -20°C for one hour in order to obtain a solid ink composition. However, it was impossible to remove the aluminum foils from the ink composition.

The ink composition was thus put for another 10 minutes at room temperature (20°C) (after the one hour at -20°C). The interface between the aluminum foils and the ink composition was molten, but the ink composition remained very sticky and it was impossible to remove the aluminum foils from the ink composition.

In conclusion, it was impossible to formulate a solid ink composition solid at room temperature (20°C) with a PEG 600. Furthermore, the ink composition with PEG 600 showed a poor stability at room temperature (20°C), and cannot be stored at temperatures higher than 45°C because of its melting point (no storage in the sun).

In view of the poor performance, further tests were not carried out.

### Example 3: Preparation of a comparative ink composition and of the corresponding water-based ink composition

A comparative ink composition, having the formula presented in Table 4 below, was prepared.

**Table 4**

| **Raw Materials** | **Ink composition (wt.-%)** |
|---|---|
| Food Blue 2 (Bleu Acide Brilliant FCF 85% E133, SA Color) | 33.27 |
| Acid Red 52 (Rhodamine Sanolin B 02, Clariant) | 17.12 |
| Methyl paraben (Ueno Methyl Paraben NF, Ueno) | 0.97 |
| PEG 8000 (Pluriol E 8000, BASF) | 48.64 |
| Total | 100 |

The solid ink composition was prepared according to the following protocol:
97.28g of PEG 8000 was put in a DISPERMAT TANK at a temperature of 70°C, under slow stirring at 300 rpm. When PEG 9000 was totally melted, 1.95g of methyl paraben (Ueno Methyl Paraben NF, Ueno) was added, and the mixture was left under slow stirring at 300 rpm during 5 minutes. 66.54g of Food Blue 2 was then added. The stirring was increased at 1,400 rpm in order to have a "doughnut effect" (i.e. when a hole opens up around the stirring blade) for 15 minutes. 34.24g of Acid Red 52 (Rhodamine Sanolin B 02, Clariant) was added, while maintaining the stirring in order to keep the "doughnut effect" for 30 minutes.

The resulting melted ink composition was then poured between two aluminum foils at room temperature (20°C), and left for 2 hours, in order is to obtain a solid ink composition.

However, it was impossible to obtain a solid ink composition because there were more powder raw materials than liquid raw materials at 70°C. Furthermore, the ink composition with PEG 8000 showed a high viscosity at room temperature (20°C), and cannot be implemented in a coloring or marking instrument.

### Example 4: Preparation of a solid ink composition and of the corresponding water-based ink composition according to the present disclosure

A solid ink composition and the corresponding water-based ink composition, obtained after addition of water, having the compositions presented in Table 5 below, were prepared.

**Table 5**

| **Raw materials** | **Solid ink composition (wt.-%)** | **Water-based ink composition (wt.-%)** |
|---|---|---|
| Food Blue 2 (Bleu Acide Brilliant FCF 85% E133, SA Color) | 23.14 | 3.42 |
| Acid Red 52 (Rhodamine Sanolin B 02, Clariant) | 11.90 | 1.76 |
| Methyl paraben (Ueno Methyl Paraben NF, Ueno) | 0.68 | 0.10 |
| PEG 4000 (Pluriol E 4000, BASF) | 54.13 | 8.00 |
| Glycerin (GLYCEROL Eur. Ph min. 99,5% Veg. Origin, SPIGA) | 10.15 | 1.5 |
| Demineralized water | - | 85.22 |
| Total | 100 | 100 |

The solid ink composition was prepared according to the following protocol:
108.25g of PEG 4000 (Pluriol E 4000, BASF) was put in a DISPERMAT TANK at a temperature of 70°C, under slow stirring at 150 rpm. When PEG 4000 was totally melted, 20.30g of glycerin (GLYCEROL Eur. Ph min. 99,5% Veg. Origin, SPIGA) was added at 500 rpm for 10 minutes. 1.35g of methyl paraben (Ueno Methyl Paraben NF, Ueno) was added, and the mixture was left under slow stirring at 500 rpm during 10 minutes. 46.28g of Food Blue 2 was then added. The stirring was increased at 2,000 rpm in order to have a "doughnut effect" (i.e. when a hole opens up around the stirring blade) for 15 minutes. 23.82g of Acid Red 52 (Rhodamine Sanolin B 02, Clariant) was added, while maintaining the stirring in order to keep the "doughnut effect" for 30 minutes.

The resulting melted ink composition was then poured between two aluminum foils at room temperature (20°C), and left for 2 hours, in order to obtain a solid ink composition.

The characteristics of the solid ink composition were as follows:
The moisture % measured for the solid ink composition of Example 4 was of 5.2%.

The melting point measured for the solid ink composition of Example 4 was of 57°C.

The dissolution time of the solid ink composition was:

**Table 6**

| | Quantity of solid ink composition (g) | Quantity of water (g) | Dissolution time (minutes) |
|---|---|---|---|
| In demineralized water | 0.74 | 4.27 | 8 |
| In tap water | 0.76 | 4.29 | 7min30 |

As can be seen from the above data, the dissolution time of the solid ink composition was roughly equivalent for demineralized water and tap water.

A water-based ink composition was then prepared by dissolving 0.74g of the solid ink composition previously prepared in 4.27g of demineralized water contained in a test tube, and shaken by the operator to reproduce the consumer action.

The characteristics of the water-based ink composition were as follows:
- Viscosity: 3.6 mPa·s,
- pH = 4.7,
- Surface Tension: 52 mN/m.

A water-based ink composition was then prepared by dissolving 0.76g of the solid ink composition previously prepared in 4.29g of tap water contained in a test tube, and shaken by the operator to reproduce the consumer action.

The characteristics of the water-based ink composition were as follows:
- Viscosity: 3.6 mPa·s,
- pH = 7.3,
- Surface Tension: 52 mN/m.

The water-based ink compositions were then introduced in a felt-pen Visacolor^{™} system. The water-based ink compositions appeared homogeneous, with no leakage and no sedimentation. The water-based ink compositions did not show any colorimetry difference with respect to the conventional water-based ink composition Visacolor^{™}.

If the color difference ΔE is less than 3, the difference of colors for the observer is not visible to the naked eye. The color difference measured for the solid ink composition in Example 4 is: ΔE = 0.4. Therefore, the use of demineralized water or tap water does not affect the color of the ink.

In the measurement of the cap-off time, it was found that a written mark on the cellulosic paper can be made after 1 day (24H), 2 days (48H) and even 3 days (72H).

It can be observed that this is difficult to make a written mark on the cellulosic paper after 4 days (96H). Consequently, a drying-up of the pen tip has occurred after 4 days (96H).

Hence, the water-based ink composition exhibits good results in terms of cap-off, because the cap-off time is 3 days (72H). The writing instrument can be left open for a long period of time i.e. 3 days (72H) without drying up.

Measurement of antimicrobial activity:
This test indicates the presence of antimicrobial agents (for example Staphylococcus aureus, Pseudomonas aeruginosa, Escherichia coli, Candida albicans, Aspergillus brasiliensis) in the water-based ink composition.

In the measurement of antimicrobial effectiveness, no microbial activity could be observed in either the demineralized water sample or the tap water sample.

From the above, it is evident that the composition of Example 4 yields a very good solid writing ink that is storage-stable and can be easily diluted to a water-based writing ink. Due to the addition of glycerol to the composition of Example 1, the cap-off time of the composition of Example 4 can be improved to good value of 4 days.

### Example 5: Preparation of a solid ink composition and of the corresponding water-based ink composition according to the present disclosure

A solid ink composition and the corresponding water-based ink composition, obtained after addition of water, having the compositions presented in Table 6 below, were prepared.

**Table 6**

| **Raw materials** | **Solid ink composition (wt.-%)** | **Water-based ink composition (wt.-%)** |
|---|---|---|
| Acid Blue 9 | 22.53 | 3.42 |
| Acid Red 52 (Rhodamine Sanolin B 02, Clariant) | 11.59 | 1.76 |
| 2-phenoxyethanol | 6.59 | 1.00 |
| PEG 4000 (Pluriol E 4000, BASF) | 52.70 | 8.00 |
| Glycerin (GLYCEROL Eur. Ph min. 99,5% Veg. Origin, SPIGA) | 6.59 | 1.00 |
| Demineralized water | - | 84.82 |
| Total | 100 | 100 |

The solid ink composition was prepared according to the following protocol:
105.40 g of PEG 4000 (Pluriol E 4000, BASF) was put in a DISPERMAT TANK at a temperature of 70°C, under slow stirring at 150 rpm. When PEG 4000 was totally melted, 13.18 g of glycerin and 13.25 g of 2-phenoxyethanol were added, and the mixture was left under slow stirring at 500 rpm for 10 minutes. 23.19 g of Acid Red 52 and 45.06 g of Blue Acid 9 were then added. The stirring was increased at 2,000 rpm in order to have a "doughnut effect" (i.e. when a hole opens up around the stirring blade) for 15 minutes.

The resulting melted ink composition was then poured between two aluminum foils at room temperature (20°C), and left for 2 hours, in order to obtain a solid ink composition. It has been observed that the resulting solid ink composition is stable at room temperature during at least three months (no change to be observed by visual evaluation).

A water-based ink composition according to the present disclosure was then prepared by dissolving 15.18% of the solid ink composition previously prepared in 84.82% of demineralized water contained in a test tube, and manually shaken to reproduce the consumer action.

The characteristics of the solid ink composition were as follows:
The moisture % measured for the solid ink composition of Example 5 was of 3.9%.

The melting point measured for the solid ink composition of Example 5 was of 54°C.

The dissolution time of the solid ink composition was:

**Table 7**

| | Quantity of solid ink composition | Quantity of water | Dissolution time |
|---|---|---|---|
| | (g) | (g) | (minutes) |
| In demineralized water | 0.76 | 4.25 | 8 |
| In tap water | 0.78 | 4.24 | 8 |

As can be seen from the above data, the dissolution time of the solid ink composition was roughly equivalent for demineralized water and tap water.

A water-based ink composition was then prepared by dissolving 0.76g of the solid ink composition previously prepared in 4.25g of demineralized water contained in a test tube, and shaken by the operator to reproduce the consumer action.

The characteristics of the water-based ink composition were as follows:
- Viscosity: 4 mPa·s,
- pH = 4.7,
- Surface tension = 49 mN/m

A water-based ink composition was then prepared by dissolving 0.78g of the solid ink composition previously prepared in 4.24g of tap water contained in a test tube, and shaken by the operator to reproduce the consumer action.

The characteristics of the water-based ink composition were as follows:
- Viscosity: 4 mPa·s,
- pH = 7.5,
- Surface tension = 49 mN/m

The water-based ink compositions were then introduced in a felt-pen Visacolor^{™} system. The water-based ink compositions appeared homogeneous, with no leakage and no sedimentation.

The water-based ink compositions did not show any colorimetry difference with respect to the conventional water-based ink composition Visacolor^{™}.

If the color difference ΔE is less than 3, the difference of colors for the observer is not visible to the naked eye. The color difference measured for the solid ink composition in Example 5 is: ΔE = 1.3. Therefore, the use of demineralized water or tap water does not affect the color of the ink.

Measurement of the cap-off time:
It was found that a written mark on the cellulosic paper can be made after 1 day (24H), 2 days (48H) and even 3 days (72H) at room temperature. It can be observed that this is difficult to make a written mark on the cellulosic paper after 4 days (96H). Consequently, a drying-up of the pen tip has occurred after 4 days (96H).

Hence, the water-based ink composition exhibits good results in terms of cap-off, because the cap-off time is 3 days (72H). The writing instrument can be left open for a long period of time i.e. 3 days (72H) without drying up.

Measurement of antimicrobial activity:
In the measurement of antimicrobial effectiveness, no microbial activity could be observed in either the demineralized water sample or the tap water sample.

By using a challenge test according to ISO11930:2019, it can be observed that the microbiological risk is acceptable with a water-based ink composition including demineralized water. Thus, the water-based ink composition, according to example 5, is in conformity with the requirements of antimicrobial protection performance test. By using a challenge test according to ISO11930:2019, with tap water, it can be observed that the microbiological risk is acceptable with a water-based ink composition including tap water. Thus, the water-based ink composition, according to example 5, is in conformity with the requirements of antimicrobial protection performance test.

Thus, it was surprisingly found that water-based ink compositions comprising 2-phenoxyethanol even meet the stringent test requirements of the challenge test according to ISO11930:2019 and outperformed comparable compositions in Example 4.

From the above, it is evident that the composition of Example 5 yields a very good solid writing ink that is storage stable and can be easily diluted to a water based writing ink. Due to the addition of glycerol, the cap off time of the composition of example 5 can again be improved to good value of 3 days.

Although the preferred embodiments of the present disclosure have been disclosed for illustrative purposes, those skilled in the art will appreciate that various modifications and alterations are possible, without departing from the spirit of the present disclosure. It is also to be understood that such modifications and alterations are incorporated in the scope of the present disclosure, in the below set of items and the accompanying claims.

The present disclosure relates in particular to the following items:
1. A solid ink composition for refilling a handheld writing tool comprising a polyethylene glycol, at least one coloring agent selected from the group consisting of dyes and pigments, and a humectant;
   wherein the ink composition is solid at about 20 °C and has a water content of less than about 15 wt.-%, relative to the total weight of the solid ink composition;
   wherein the polyethylene glycol has a melting point of at least about 20°C and a number average molecular weight of between about 800 and about 7800 g/mol; and
   wherein the humectant is a water-soluble alcohol having a melting point of less than about 20 °C and a boiling point of at least about 150°C.
2. The solid ink composition of item 1, wherein the polyethylene glycol has a number average molecular weight of between about 3000 and about 7500 g/mol, more specifically between about 3400 and about 7000 g/mol.
3. The solid ink composition of item 1 or item 2, wherein the coloring agent is a dye selected from the group consisting of azoic dyes, triarylmethane dyes, phthalocyanine derivatives dyes, xanthene dyes, and mixtures thereof, in particular a non-pH sensitive dye.
4. The solid ink composition of any one of items 1 to 3, wherein the polyethylene glycol is present in an amount ranging from about 30 to about 90% by weight, more specifically from about 35 to about 85% by weight, and in particular from about 40 to about 80% by weight, relative to the total weight of the solid ink composition.
5. The solid ink composition of any one of items 1 to 4, wherein the coloring agent is present in an amount ranging from about 0.75 to about 70% by weight, more specifically from about 1 to about 60% by weight, and in particular from about 1.75 to about 50% by weight, relative to the total weight of the solid ink composition.
6. The solid ink composition of any one of items 1 to 5, wherein the solid ink composition has a water content of less than about 10 wt.-%, more specifically less than about 5 wt.-%, and in particular less than about 4 wt.-%, relative to the total weight of the solid ink.
7. The solid ink composition of any one of items 1 to 6, wherein the humectant comprises an aliphatic alcohol wherein its hydrocarbon chain is optionally interrupted by one or more heteroatoms, in particular heteroatoms selected form the group consisting of oxygen, nitrogen and sulfur.
8. The solid ink composition of any one of items 1 to 7, wherein the humectant comprises an alcohol having at least 2 hydroxyl groups, more specifically an aliphatic alcohol having between 2 and about 6 hydroxyl groups, and in particular an aliphatic alcohol having 2, 3, or 4 hydroxyl groups.
9. The solid ink composition of any one of items 1 to 8, wherein the humectant is selected from glycerin, ethylene glycol, diethylene glycol, triethylene glycol, propylene glycol, and thiodiglycol, and mixtures thereof; more specifically wherein the humectant is selected from glycerin and triethylene glycol; and in particular wherein the humectant is glycerin.
10. The solid ink composition of any one of items 1 to 9, wherein the humectant is present in an amount ranging from about 1 to about 27 wt.-%, more specifically from about 2 to about 22 wt.-%, and in particular from about 4 to about 18 wt.-%, relative to the total weight of the solid ink composition.
11. The solid ink composition of any one of items 1 to 10, wherein the weight ratio between humectant and polyethylene glycol is comprised between about 1:100 and about 1:1, in particular between about 1:30 and about 1:2, and in particular from about 1:15 and about 1:4.
12. The solid ink composition of any one of items 1 to 11, wherein the solid ink composition is in the form of a tablet or powder, and in particular in the form of a tablet or a powder which is contained in a sachet.
13. The solid ink composition of any one of items 1 to 12, wherein the components of the solid ink composition are homogenously dispersed in the solid ink composition.
13. The solid ink composition of any one of items 1 to 12, wherein the solid ink composition is dissolvable or dispersible in water under formation of a homogeneous aqueous mixture when the solid ink composition is stirred or shaken at about 20°C for about 30 seconds to about 10 minutes, in about 4 to about 15 times its weight of water, in particular in about 6 to about 10 times its weight of water.
14. The solid ink composition of any one of items 1 to 13, wherein the solid ink composition further comprises a biocide, in particular 2-phenoxyethanol.
15. A method for preparing a solid ink composition according to any one of items 1 to 14, comprising the steps of:
   (a) melting the polyethylene glycol having a melting point of at least about 20°C and a number average molecular weight of between about 800 and about 7800 g/mol;
   (b) combining the molten polyethylene glycol of step (a) with the at least one coloring agent and the water-soluble alcohol having a melting point of less than about 20 °C and a boiling point of at least about 150 °C;
   (c) stirring the combined components at least at a temperature at which the polyethylene glycol remains molten;
   (d) solidifying the ink composition by cooling; and optionally
   (e) shaping the solid ink composition in the form of a tablet or grinding the solid ink composition to a powder.
16. A water-based ink composition comprising the components of the solid ink composition according to any one of items 1 to 14 and a solvent, in particular water, in particular wherein said water-based ink composition is in liquid form.
17. The water-based ink composition according to item 16, wherein the components of the solid ink composition according to any one of items 1 to 14 are present in a total amount of about 2 to about 40 wt.-%, more specifically in a total amount of about 5 to about 25 wt.-%, and in particular in a total amount of about 7 to about 22 wt.-%, relative to the total weight of the water-based ink composition.
18. The water-based ink composition according to item 16 or item 17, wherein the solvent is present in an amount of from about 60 to about 98 wt.-%, more specifically from about 75 to about 95 wt.-%, and in particular from about 78 to about 90 wt.-%, relative to the total weight of the water-based ink composition.
19. A method for preparing a water-based ink composition according to any one of items 16 to 18, comprising the steps of combining a solid ink composition according to any one of items 1 to 14 with a solvent, in particular water.
20. Use of a solid ink composition according to any one of items 1 to 14 for refilling a handheld writing tool, in particular a felt-pen, a highlighter, a roller pen, or a marker.
21. Use of a water-based ink composition according to any one of items 16 to 18 for refilling a handheld writing tool, in particular a felt-pen, a highlighter, a roller pen, or a marker.
22. An optionally rechargeable handheld writing tool, in particular a felt-pen, a highlighter, a roller pen, or a marker, comprising the solid ink composition according to any one of items 1 to 14 or the water-based ink composition according to any one of items 16 to 18.
23. A method of recharging a rechargeable handheld writing tool, in particular a felt-pen, a highlighter, a roller pen, or a marker, comprising the steps of:
   (a) inserting a solid ink composition according to any one of items 1 to 14 into the handheld writing tool,
   (b) inserting a solvent, in particular water, into the handheld writing tool, and
   (c) mixing the solid ink composition and the solvent by agitation of the handheld writing tool.
24. A method of recharging a rechargeable handheld writing tool, in particular a felt-pen, a highlighter, a roller pen, or a marker, comprising the steps of inserting a water-based ink composition according to any one of items 16 to 18 into the handheld writing tool.

## Claims

1. A solid ink composition for refilling a handheld writing tool comprising a polyethylene glycol, at least one coloring agent selected from the group consisting of dyes and pigments, and a humectant;
wherein the ink composition is solid at about 20 °C and has a water content of less than about 15 wt.-%, relative to the total weight of the solid ink composition;
wherein the polyethylene glycol has a melting point of at least about 20°C and a number average molecular weight of between about 800 and about 7800 g/mol; and
wherein the humectant is a water-soluble alcohol having a melting point of less than about 20 °C and a boiling point of at least about 150°C.

2. The solid ink composition of claim 1, wherein the polyethylene glycol has a number average molecular weight of between about 3000 and about 7500 g/mol, more specifically between about 3400 and about 7000 g/mol; in particular wherein the polyethylene glycol is present in an amount ranging from about 30 to about 90% by weight, more specifically from about 35 to about 85% by weight, and in particular from about 40 to about 80% by weight, relative to the total weight of the solid ink composition.

3. The solid ink composition of claim 1 or claim 2, wherein the coloring agent is a dye selected from the group consisting of azoic dyes, triarylmethane dyes, phthalocyanine derivatives dyes, xanthene dyes, and mixtures thereof, in particular a non-pH sensitive dye; in particular wherein the coloring agent is present in an amount ranging from about 0.75 to about 70% by weight, more specifically from about 1 to about 60% by weight, and in particular from about 1.75 to about 50% by weight, relative to the total weight of the solid ink composition.

4. The solid ink composition of any one of claims 1 to 3, wherein the humectant comprises:
an aliphatic alcohol wherein its hydrocarbon chain is optionally interrupted by one or
more heteroatoms, in particular heteroatoms selected form the group consisting of oxygen, nitrogen and sulfur; and/or
wherein the humectant comprises an alcohol having at least 2 hydroxyl groups, more specifically an aliphatic alcohol having between 2 and about 6 hydroxyl groups, and in particular an aliphatic alcohol having 2, 3, or 4 hydroxyl groups; and/or
wherein the humectant is selected from glycerin, ethylene glycol, diethylene glycol,
triethylene glycol, propylene glycol, and thiodiglycol, and mixtures thereof; more specifically wherein the humectant is selected from glycerin and triethylene glycol; and
in particular wherein the humectant is glycerin.

5. The solid ink composition of any one of claims 1 to 4, wherein the solid ink composition is dissolvable or dispersible in water under formation of a homogeneous aqueous mixture when the solid ink composition is stirred or shaken at about 20°C for about 30 seconds to about 10 minutes, in about 4 to about 15 times its weight of water, in particular in about 6 to about 10 times its weight of water.

6. A method for preparing a solid ink composition according to any one of claims 1 to 5, comprising the steps of:
(a) melting the polyethylene glycol having a melting point of at least about 20°C and a number average molecular weight of between about 800 and about 7800 g/mol;
(b) combining the molten polyethylene glycol of step (a) with the at least one coloring agent and the water-soluble alcohol having a melting point of less than about 20 °C and a boiling point of at least about 150 °C;
(c) stirring the combined components at least at a temperature at which the polyethylene glycol remains molten;
(d) solidifying the ink composition by cooling; and optionally
(e) shaping the solid ink composition in the form of a tablet or grinding the solid ink composition to a powder.

7. A water-based ink composition comprising the components of the solid ink composition according to any one of claims 1 to 5 and a solvent, in particular water, in particular wherein said water-based ink composition is in liquid form.

8. The water-based ink composition according to claim 7, wherein the components of the solid ink composition according to any one of claims 1 to 5 are present in a total amount of about 2 to about 40 wt.-%, more specifically in a total amount of about 5 to about 25 wt.-%, and in particular in a total amount of about 7 to about 22 wt.-%, relative to the total weight of the water-based ink composition.

9. The water-based ink composition according to claim 7 or claim 8, wherein the solvent is present in an amount of from about 60 to about 98 wt.-%, more specifically from about 75 to about 95 wt.-%, and in particular from about 78 to about 90 wt.-%, relative to the total weight of the water-based ink composition.

10. A method for preparing a water-based ink composition according to any one of claims 7 to 9, comprising the steps of combining a solid ink composition according to any one of claims 1 to 5 with a solvent, in particular water.

11. Use of a solid ink composition according to any one of claims 1 to 5 for refilling a handheld writing tool, in particular a felt-pen, a highlighter, a roller pen, or a marker.

12. Use of a water-based ink composition according to any one of claims 7 to 9 for refilling a handheld writing tool, in particular a felt-pen, a highlighter, a roller pen, or a marker.

13. An optionally rechargeable handheld writing tool, in particular a felt-pen, a highlighter, a roller pen, or a marker, comprising the solid ink composition according to any one of claims 1 to 5 or the water-based ink composition according to any one of claims 7 to 9.

14. A method of recharging a rechargeable handheld writing tool, in particular a felt-pen, a highlighter, a roller pen, or a marker, comprising the steps of:
(a) inserting a solid ink composition according to any one of claims 1 to 5 into the handheld writing tool,
(b) inserting a solvent, in particular water, into the handheld writing tool, and
(c) mixing the solid ink composition and the solvent by agitation of the handheld writing tool.

15. A method of recharging a rechargeable handheld writing tool, in particular a felt-pen, a highlighter, a roller pen, or a marker, comprising the steps of inserting a water-based ink composition according to any one of claims 7 to 9 into the handheld writing tool.
